# EUROPÄISCHE PATENTSCHRIFT

(11) **EP 0 365 557 B1**
(45) Veröffentlichungstag und Bekanntmachung des Hinweises auf die Patenterteilung: **12.05.1993**
(21) Anmeldenummer: 88905376.5
(22) Anmeldetag: 21.06.1988
(51) Int. Cl.: B23Q 16/08

(54) **POSITIONIEREINRICHTUNG UND DEREN VERWENDUNG**
POSITIONING DEVICE AND ITS USE
AGENCEMENT DE POSITIONNEMENT ET SON UTILISATION

(30) Priorität: 23.06.1987 DE 3720604; 07.07.1987 DE 3722309; 07.07.1987 DE 3722308
(43) Veröffentlichungstag der Anmeldung: 02.05.1990
(73) Patentinhaber: GEDIB INGENIEURBÜRO UND INNOVATIONSBERATUNG GMBH, D-57319 Bad Berleburg (DE)
(72) Erfinder: BALD, Hubert, D-5920 Bad Berleburg (DE)
(74) Vertreter: Sparing - Röhl - Henseler Patentanwälte
(86) Internationale Anmeldenummer: EP8800546
(87) Internationale Veröffentlichungsnummer: WO8810172

(56) Entgegenhaltungen:
- EP-A- 0 048 458
- EP-A- 0 111 092
- EP-A- 0 255 042
- DE-A- 2 022 003
- DE-C- 885 951
- FR-A- 2 321 622
- FR-A- 2 411 667
- US-A- 2 908 195
- US-A- 4 512 068

## Beschreibung

Die Erfindung betrifft eine Positioniereinrichtung zum Fügen zweier Bauteile in vorgegebener Relativlage mit den im Oberbegriff des Patentanspruchs 1 genannten Merkmalen. Eine solche Vorrichtung ist aus der Druckschrift EP-A-111 092 bekannt. Dort ist ein sich verjüngendes Positionierelement vorgesehen, das beim Fügen in eine aus einerMembran ausgenommene Positionierausnehmung eindringt. Die Membran ist im Abstand von der Positionierausnehmung auf einem Bund abgestützt und mittels Schrauben an dem zweiten Bauteil befestigt.

Aufgabe der Erfindung ist es, eine Positioniereinrichtung gleicher Gattung zu schaffen, bei der die Fügegenauigkeit trotz der beim Fügen in dem plattenartigen Träger entstehenden Spannungen auch bei oftmaliger Wiederholung des Fügevorgangs erhalten bleibt.

Die erfindungsgemäß zur Lösung dieser Aufgabe vorgesehenen Merkmale sind in dem kennzeichnenden Teil des Patentanspruchs 1 definiert. Die von dem unabhängigen Anspruch 1 abhängenden Ansprüche definieren bevorzugte Weiterbildungen dieser Konzeption.

Die Erfindung wird nachstehend im einzelnen unter Bezugnahme auf die beigefügten Zeichnungen näher erläutert.
- Fig. 1: zeigt eine Positioniereinrichtung gemäß der Erfindung vor dem Zusammenspannen der beiden Bauteile im Axialschnitt,
- Fig. 2: zeigt die Einrichtung nach Fig. 1 nach dem Fügen und Spannen,
- Fig. 3: zeigt im Axialschnitt eine erfindungsgemäße Positioniereinrichtung in einer für eine universelle Verwendungsmöglichkeit geeigneten Ausgestaltung.
- Fig. 4: zeigt eine andere Ausführung der Positioniereinrichtung mit nur einer axialverlagerbaren Positionierausnehmung.
- Fig. 5: zeigt im Schnitt eine Baueinheit aus einer Aufspannunterlage mit aufgespanntem Werkstück, und
- Fig. 6: zeigt im Schnitt eine Baueinheit aus zwei Werkzeughälften.

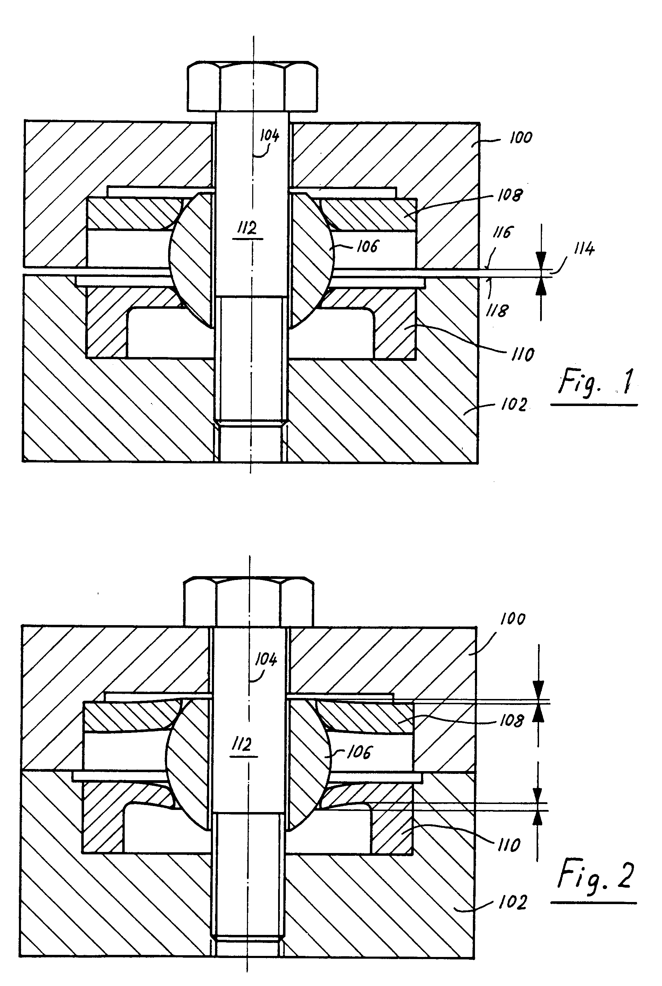

Die grundsätzlichen Wirkprinzipien der erfindungsgemäßen Positioniereinrichtung werden in Fig. 1 und 2 verdeutlicht, von denen Fig. 1 die Situation vor dem Zusam - menspannen darstellt und Fig. 2 die Situation nach dem Zusammenspannen.

In der Ausführungsform nach Fig. 1 und 2 sind die beiden Bauteile 1oo und 1o2 bezüglich einer Achse 104 zuzentrieren, die durch den Mittelpunkt der Kugel 1o6 verläuft. Jedes Bauteil 100, 102 ist mit einer Positionierplatte 108 bzw. 110 von unterschiedlicher Konstruktion versehen, die jeweils in eine entsprechende Bohrung des betreffenden Bauteils eingefügt ist. Die Platte 108 ist tatsächlich nur eine gelochte Scheibe, nahe ihrem Außemumfang durch eine Schulter des Bauteils 100 abgestützt, wahrend die Platte 110 topfförmig mit einer zentralen Lochung des Bodens ist und sich mit der freien Kante ihres Randes abstützt. Die Kugel 106 ist durchbohrt und mit Spiel von einer Spannschraube 112 durchsetzt, die in das Bauteil 102 einschraubbar ist und mit ihrem Kopf auf die gegenüberliegende Außenfläche des Bauteils 100 drückt.

Der durch Kontaktzonen der Positionierausnehmungen in den Positionierplatten beim Anliegen der Fügeflächen 116, 118 bei entfernter Kugel definierbare Kugel-Durchmesser hat ein Untermaß bezüglich der Kugel 1o6, so daß vor dem Anziehen der Schraube, wie in Fig. 1 dargestellt, ein Spalt 114 zwischen den einander gegenüberliegenden Fügeflächen vorhanden ist. Beim Zusammenspannen mittels der Schraube werden die Teile 106, 108 und 110 elastisch deformiert, nämlich die Kugel 106 durch Druckspannungen und die Platten 108 und 110 durch Druck- und -- hauptsächlich -- Biegespannungen, wobei die Aufteilung der Deformationskomponenten vom Konstrukteur durch entsprechende Wahl der Abmessungen vorgenommen werden kann. Dabei spielt natürlich auch der Elastizitätsmodul der verwendeten Materialien eine Rolle wie auch der zwischen Ihnen wirkende Reibungskoeffizient und das Profil der Positionierausnehmungen und der ausgewählte Kontaktbereich der Kugel 106 (näher an ihrem Äquator oder näher an ihren Polen). Es hat sich gezeigt, daß selbst bei Kugel-Durchmessern von 60 mm eine Wiederholgenauigkeit der Zentrierung in der Größenordnung von 1 Mikron und kleiner er - reichbar ist, ohne daß eine unverhältnismäßig hohe Spannkraft aufzubringen wäre.

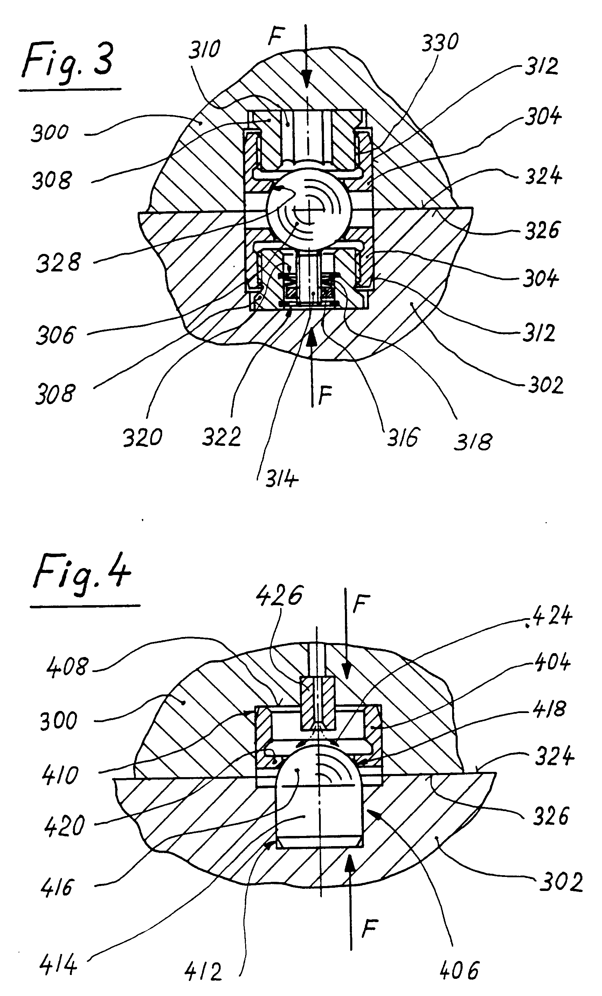

In den Figuren 3 und 4 werden Positioniereinrichtungen gezeigt, die ganz allgemein verwendbar sind, z.B. im Bereich des Maschinenbaues oder des Vorrichtungsbaues. Dabei sind die Positioniereinrichtungen durch das Zusammenwirken von standardisierten Bauelementen realisiert worden. Die die Positionierausnehmungen 328, 418 tragenden und an ihren membramförmigen Partien in Axialrichtung verformbaren Bauelemente sind als einpreßbare "Positioniereinsätze" ausgebildet. Diese standardisierten Positioniereinsätze sind mit gehärteten und geschliffenen Flächen am Außendurchmesser und an der Positionierausnehmung versehen und weisen am Außenzylinder eine Einpreßphase auf.

Die in Figur 3 und 4 dargestellten Situationen entsprechen der der Figur 2, d.h., die beiden in eine genaue Relativlage zu positionierenden Bauteile 300 und 302 sind durch eine Spannkraft F an ihren Fügeflächen 324 und 326 zusammengespannt, nachdem zuvor ein Fügespalt (ähnlich 114 in Fig. 1) unter Deformation des plattenförmigen Teiles der Positioniereinsätze 304 bzw. 404 (in Fig. 4) beseitigt worden ist.

In Figur 3 kann die Tiefe der in den Bohrungen 312 eingepreßten Positioniereinsätze 304 durch Schraubeinsätze 308 vorbestimmt bzw. verändert werden. Ein Innensechskant 31o ermöglicht die Erzeugung einer Schraubbewegung.

Der Preßsitz des Positioniereinsatzes 304 sichert durch Spielfreiheit einen konzentrischen Sitz der Positionierausnehmung 328 relativ zur Bauteilebohrung 312 und gewährleistet gleichzeitig eine gute queraxiale Steifigkeit des Positioniereinsatzes.

Um die als Positionierelement dienende Kugel 306 unverlierbar zu machen, ist ein Gewindebolzen 314 angeschweißt, welcher im Eingriff mit einer sich gegen Tellerfedern 318 abstützenden Mutter 316 steht. Ein Herausfallen von Tellerfedern und Mutter wird durch 2 Sicherungsringe 320, 322 verhindert.

In Figur 4 sitzt der Positioniereinsatz 404 mit dem die Positionierausnehmung 418 aufweisenden plattenförmigen Bestandteil 420 auf dem Boden 408 der Bauteilbohrung 410 auf.

Das Positionierelement 406 verfügt in diesem Falle über eine über die Fügefläche 324 vorstehende sphärisch, vorzugsweise jedoch kugelförmig, geformte Kontaktzone 416 und über einen zylindrischen Teil 414, mit dem es in der Aufnahmebohrung 412 des Bauteiles 302 eingepreßt ist.

Im Bauteil 300 ist eine Düse 426 eingesetzt, deren Innenbohrung mit einer nicht dargestellten Druckluftquelle verbunden ist.

Beim Annähern der beiden Fügeflächen 324, 326 während des Fügevorganges ist zwischen der Kontaktzone 416 und der Positionierausnehmung 418 ein Ringspalt vorhanden. Ein durch die Düse 426 während des Fügevorganges hindurchtretender Luftstrahl wandelt sich beim Auftreffen auf die Kontaktzone 416 in einen zur Mittenachse rotationssymmetrischen Luftfilm (was durch die Pfeile 424 angedeutet ist), welcher an der Oberfläche der Kontaktzone 416 etwaig vorhandene Schmutzpartikel wegbläst.

Nach Durchführung des Fügevorganges kann in den nun verschlossenen Innenraum von Bohrung 41o Prüfluft durch die Düse 426 eingelassen werden, um über die zu prüfende Dichtigkeit auf einen korrekt durchgeführten Positioniervorgang schließen zu können.

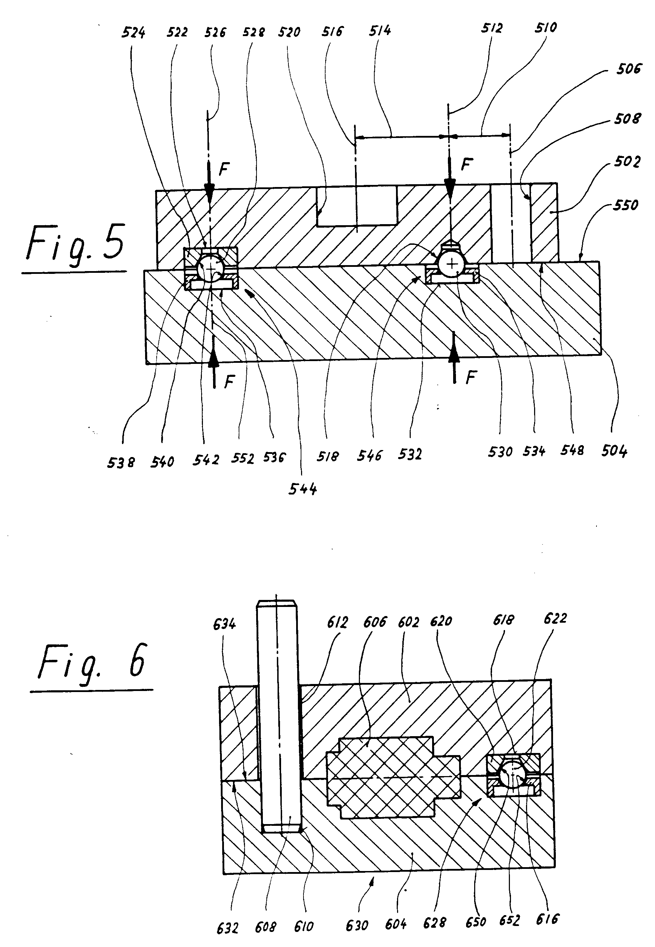

Spezielle Einsatzgebiete der bisher beschriebenen Positioniereinrichtungen werden in den Figuren 5 und 6 gezeigt.

In Figur 5 wird eine vorteilhafte Anwendung der erfinderischen Positioniereinrichtung im Zusammenhang mit der Positionierung von Werkstücken auf Aufspannunterlagen gezeigt.

Ein zu bearbeitendes Bauteil 502 ist mittels zweier Positioniereinrichtungen 544, 546 relativ zur Aufspannunterlage 504 positioniert und mit seiner Aufspannfläche 548 unter der Einwirkung von durch Pfeile F symbolisierten Spannkräften gegen die Aufnahmefläche 550 der Aufspannunterlage verspannt.

Die mittels der kugelförmigen Positionierelemente 528, 530 in koinzidenz gebrachten Mittenachsen der Positioniereinrichtungen sind durch die Linien 512, 526 gekennzeichnet.

Zur Veranschaulichung der Variationsmöglichkeit sind die beiden Positioniereinrichtungen aus unterschiedlichen Bauelementen zusammengesetzt dargestellt. Links sind im oberen, wie im unteren Teil in den Aufnahmebohrungen 522, 536 Positioniereinsätze 524, 538 eingesetzt (ähnlich Teil 404 in Fig. 4), die mit ihren zentrischen Bohrungen die eigentlichen Positionieraus - nehmungen 540, 542 bilden.

Rₑchts ist die Positionierausnehmung im unteren Teil an dem Positioniereinsatz 534 ausgebildet und im oberenTeil unmittelbar in das Bauteil 502 eingeformt.

Das aufgespannte Bauteil 502 könnte ein beliebiges Werkstück sein. Um einen besonderen Einsatzfall für die Positioniereinrichtung nach der Erfindung demonstrieren zu können, wird für Figur 5 angenommen, daß es sich bei dem Bauteil 502 um ein solches handelt, welches zur Spezies der Normalien gehört, welche vom Normalienhersteller in gewissem Umfang vorbearbeitet werden und welche nachfolgend von dem Anwender zur Herstellung der endgültigen Formgestaltung nachbearbeitet werden.

Die Nachfolgebearbeitung, z.B. die Herstellung einer zur Mittenachse 516 zentrischen zylindrischen Ausnehmung 520 findet dabei in der Regel durch mehrereaufeinanderfolgende Arbeitsoperationen (z.B. Fräsen, Erodieren, Schleifen) auf unterschiedlichen Arbeitsmaschinen statt.

Wichtig bei der Durchführung der nacheinander folgenden Operationen ist, daß bei jeder Operation ein genauer Maßbezug zu den bei der vorangegangenen Operation geschaffenen Bearbeitungsmerkmalen hergestellt werden muß. Dabei kann es auch erforderlich sein, daß die vom Anwender zu schaffenden Bearbeitungsmerkmale in einen genauen Maßbezug zu bereits vom Hersteller geschaffenen Merkmalen, z.B. Bohrung 508 zu bringen sind.

Den bereits vom Hersteller angebrachten Positionierausnehmungen 540, 518 kommt im Verlaufe der Weiterbearbeitung beim Anwender die Aufgabe zu, bei jeder neuen Arbeitsoperation eine genaue Ausrichtung des Bauteiles vorzunehmen und als Referenz-Maßverkörperung für die bei der Operation herzustellenden Maße zu dienen.

Bei jeder Arbeitsoperation kann die Aufspannunterlage 504 eine andere sein, die dabei auch stets auf ein und derselben Bearbeitungsmaschine verbleiben kann.

Im letzteren Falle ist das Meßsystem der Bearbeitungsmaschine vorteilhafterweise stets in einen genauen Maßbezug zu der Aufspannunterlage gebracht, wozu z.B. die Mittenachse der Positioniereinsätze 538, 534 herangezogen werden können. Automatisch ist damit das Maschinen-Meßsystem auch genau relativ zum Bauteil 502 ausgerichtet.

Mit dem beschriebenen Verfahren kann sowohl ein bedeutender Rationalisierungseffekt wie auch - bedingt durch die ultrapräzise Positioniergenauigkeit der Positioniereinrichtungen - eine beachtliche Steigerung der Genauigkeit der Lage der an den Bauteilen gefertigten Bearbeitungsmerkmale erzielt werden.

Während die an den Aufspannunterlagen angebrachten Einzelteile der Positioniereinrichtungen stets an der gleichen Stelle wieder verwendet werden können, ist dies für das Bauteil 502 nicht der Fall.

Zur Verringerung des Herstelleraufwandes für das Bauteil 502 kann die Positionierausnehmung 518 unmittelbar in den Bauteilkörper eingelassen sein.

Dabei ist eine Kugelkalotten-förmige Ausbildung der Kontaktzonen vorteilhaft. Eine weitere Möglichkeit zur Kosteneinsparung ist dadurch gegeben, daß das Normalien-Bauteil 502 zunächst nur Aufnahmebohrungen 522 aufweist, in die nachträglich noch die Positioniereinsätze 524 mit den eigentlichen Positionierausnehmungen 540 eingesetzt (eingepreßt) werden, wobei die Positioniereinsätze 524 mehrfach wiederverwendbar sind.

Am Bauteil 502 können auch mehr als 2 Positionierausnehmungen angebracht sein. Die Aufspannunterlage 504 wird in derRegel eine Vielzahl von Positionierausnehmungen aufweisen, um Bauteile unterschiedlicher Größe aufnehmen zu können.

Vorzugsweise liegen die Mittenachsen der Positionierausnehmungen von Bauteil und Aufspannunterlage auf dem Kreuzungspunkt von Rasterlinien eines Normrasters.

Figur 6 zeigt den Einsatz einer Positioniereinrichtung an einem Spritzgußwerkzeug zur extrem genauen Zentrierung der beiden Formhälften 602 und 604. Die Positioniereinrichtung 628 und die Führungssäule 608 sind zeichnerisch nur einmal dargestellt, obwohl beide jeweils zweimal vorhanden sind. Die Führungssäulen 608 sind mit Untermaß in den Führungsbohrungen 612 eingesetzt. Sie übernehmen die Führung der oberen Formhälfte beim Öffnen des Werkzeuges zum Ausstoßen des Spritzteiles 606 sowie auch beim Schließen des Werkzeuge als Vorzentrierung für den erst in der letzten Phase des Schließweges einsetzenden Positioniervorgang durch die Positioniereinrichtungen 628. Die Positioniereinrichtungen 628 verfügen im gezeigten Beispiel über Positioniereinsätze 616, 620, wovon lediglich das Teil 616 über einen axialverformbaren plattenförmigen Bestandteil verfügt.

Die durch die Pfeile F symbolisierten Kräfte können nicht nur durch mechanisch wirkende Spannelemente von Hand erzeugt werden, sondern durch Unterdruck magnetisch, elektromagnetisch hydraulisch oder durch andere Mittel eingeleitet werden.

## Patentansprüche

1. Positioniereinrichtung zum Fügen zweier Bauteile in vorgegebener Relativlage, mit den Merkmalen:
(a) ein erstes Bauteil (102, 302) weist ein vorkragendes bezüglich einer Achse (104, 428) zentralsymmetrisches und sich im Bereich von Kontaktzonen (430) nach außen sphärisch gekrümmt verjüngendes Positionierelement (106, 416) auf,
(b) ein zweites Bauteil (100, 300) weist eine bezüglich einer Achse (104, 428) zentralsymmetrische und sich im Bereich von Kontaktzonen (432) nach innen verjüngende Positionierausnehmung (418) auf und ist mit dem ersten Bauteil derart zusammenfügbar, daß die Achsen beider zusammenfallen,
(c) beide Bauteile weisen einander zugekehrte Fügeflächen (116, 118, 326, 324) auf, die nach dem Zusammenfügen aneinanderliegen, wobei das Positionierelement und die Positionierausnehmung derart dimensioniert sind, daß der Fügevorgang abläuft wie in den nachstehenden Merkmalen (d) und (e) definiert ist,
(d) beim Zusammenfügen dringt in einer ersten Fügephase das Positionierelement in die Positionierausnehmung ein, bis die für die Zentrierung vorgesehenen Kontaktzonen beider Bauteile einander berühren, während zwischen den Fügeflächen noch ein Fügespalt (114) vorliegt,
(e) in einer zweiten Fügephase wird der Fügespalt unter Einwirkung einer axialen Spannkraft geschlossen, wobei das Material im Bereich der Kontaktzonen einer elastischen Deformation unterworfen wird, wobei die elastische Deformation überwiegend eine Biegedeformation unter Materialverlagerung im wesentlichen in axialer Richtung ist,
(f) das Positionierelement und/oder die Positionierausnehmung sind an einem plattenartigen Träger (108, 420) vorgesehen, der nur nahe seiner Außenkontur axial abgestützt und mit seinem Zentralbereich in Axialrichtung ausfederbar ist, **dadurch gekennzeichnet**, daß der plattenartige Träger (108, 420) als Boden eines in eine Bauteilbohrung eingesetzten Topfes (110, 404) ausgebildet ist.

2. Positioniereinrichtung nach Anspruch 1, dadurch gekennzeichnet, daß beide Bauteile Positionierausnehmungen (418, 412) aufweisen, zwischen denen das Positionierelement (106, 416) angeordnet ist.

3. Positioniereinrichtung nach Anspruch 1, dadurch gekennzeichnet, daß der plattenartige Träger (108, 420) mit einem queraxialen Festsitz in das betreffende Bauteil eingesetzt ist.

4. Positioniereinrichtung nach einem der Ansprüche 1 bis 3, dadurch gekennzeichnet, daß das Positionierelement (416) wenigstens einseitig, wenigstens im Bereich der Berührung mit der Positionierausnehmung (418) kugelförmig ausgebildet ist.

5. Positioniereinrichtung nach Anspruch 4, dadurch gekennzeichnet, daß das Positionierelement (306) eine Kugel ist.

6. Positioniereinrichtung nach einem der Ansprüche 3 bis 5, dadurch gekennzeichnet, daß das Positionierelement (306) einen in eines der Bauteile hineinragenden Fortsatz (314) für eine selbsthaltende Befestigung aufweist.

7. Positioniereinrichtung nach einem der Ansprüche 1 bis 6, dadurch gekennzeichnet, daß die Positioniereinrichtung (544, 546) zwei fach oder mehrfach zur Positionierung zweier Bauteile (502, 504) vorgesehen ist.

## Claims

1. Positioning device for joining two components in a prescribed relative position, having the features:
(a) a first component (102, 302) has a projecting positioning member (106, 416) centrally symmetrical in relation to an axis (104, 428) and tapering outwards with a spherical curvature in the region of contact zones (430),
b) a second component (100, 300) has a positioning recess (418) centrally symmetrical in relation to an axis (104, 428) and tapering inwards in the region of contact zones (432), and is capable of being joined to the first component in such a manner that the axes of both of them coincide,
(c) both components have joint surfaces (116, 118, 326, 324) facing one another, which, after assembly, lie one against the other, the positioning member and the positioning recess having dimensions such that the joining operation takes place as defined in features (d) and (e) below,
(d) during assembly the positioning member penetrates into the positioning recess in a first joining phase, until the contact zones provided for centering of the two components come into contact with one another, while a joint gap (114) still exists between the joint surfaces,
(e) in a second joining phase the joint gap is closed through the action of an axial tension force, the material in the region of the contact zones being subjected to elastic deformation, the elastic deformation being predominantly a bending deformation with displacement of material substantially in the axial direction,
(f) the positioning member and/or the positioning recess are provided on a plate-like carrier (108, 420) which is axially supported only near its outside contour and with its central region is resilient in the axial direction, characterised in that the plate-like carrier (108, 420) is in the form of the bottom of a pot (110, 404) inserted into a bore in the component.

2. Positioning device according to Claim 1, characterised in that both components have positioning recesses (418, 412), between which the positioning member (106, 416) is disposed.

3. Positioning device according to Claim 1, characterised in that the plate-like carrier (108, 420) is inserted into the respective component with an interference fit in the direction of the transverse axis.

4. Positioning device according to one of Claims 1 to 3, characterised in that the positioning member (416) is spherical in shape at least on one side, at least in the region of its contact with the positioning recess (418).

5. Positioning device according to Claim 4, characterised in that the positioning member (306) is a ball.

6. Positioning device according to one of Claims 3 to 5, characterised in that the positioning member (306) has an extension (314), projecting into one of the components, for self-locking fastening.

7. Positioning device according to one of Claims 1 to 6, characterised in that two or more positioning devices (544, 546) are provided for positioning two components (502, 504).

## Revendications

1. Dispositif de positionnement pour assembler deux pièces de construction dans une position relative prédéterminée, dans lequel:
(a) une première pièce de construction (102, 302) comprend un élément de positionnement (106, 416) ayant une symétrie de révolution vis-à-vis d'un axe (104, 428) en se rétrécissant par une courbe sphérique convexe près de zones de contact (430),
(b) une deuxième pièce de construction (100, 300) comprend une cavité de positionnement (418) ayant une symétrie de révolution vis-à-vis d'un axe (104, 428) en se rétrécissant vers l'intérieur près de zones de contact (432), cette deuxième pièce pouvant être assemblée à la première pièce de telle façon que les deux axes coincident,
(c) les deux pièces de construction présentent des surfaces de jonction opposées (116, 118, 326, 324) qui après assemblage s'appliquent l'une sur l'autre, l'élément de positionnement ainsi que la cavité de positionnement ayant des dimensions telles que le processus d'assemblage se déroule comme spécifié dans les caractéristiques (d) et (e) ci-dessous,
(d) pendant une première phase d'assemblage, l'élément de positionnement pénètre dans la cavité de positionnement, jusqu'à ce que les zones de contact prévues pour le centrage des deux pièces viennent en contact l'une de l'autre, alors que subsiste encore un intervalle d'assemblage entre les surfaces d'assemblage,
(e) pendant une seconde phase d'assemblage, l'intervalle d'assemblage est supprimé sous l'action d'une force de serrage axial, le matériau étant soumis, près des zones de contact, à une déformation élastique qui est essentiellement une déformation de flexion avec déplacement du matériau essentiellement dans la direction axiale,
(f) l'élément de positionnement et/ou la cavité de positionnement sont prévus sur un support en forme de plateau (108, 420) qui ne prend appui axialement que près de sa périphérie extérieure et qui peut se déformer élastiquement dans la direction axiale dans sa zone centrale, caractérisé en ce que le support en forme de plateau (108, 420) constitue le fond d'une cuvette (110, 404) insérée dans une cavité d'une pièce de construction.

2. Dispositif de positionnement suivant la revendication 1, caractérisé en ce que les deux pièces de construction présentent des cavités de positionnement (418, 412) entre lesquelles est placé l'élément de positionnement (106, 416).

3. Dispositif de positionnement suivant la revendication 1, caractérisé en ce que le support en forme de plateau (108, 420) est inséré dans la pièce de construction correspondante par ajustement avec serrage dans une direction radiale.

4. Dispositif de positionnement suivant l'une quelconque des revendications 1 à 3, caractérisé en ce que l'élément de positionnement (416) présente une forme sphérique au moins d'un côté et au moins dans la zone de contact avec la cavité de positionnement (418).

5. Dispositif de positionnement suivant la revendication 4, caractérisé en ce que l'élément de positionnement (306) est une bille.

6. Dispositif de positionnement suivant l'une quelconque des revendications 3 à 5, caractérisé en ce que l'élément de positionnement (306) comprend une saillie de maintien (314) s'étendant dans l'une des pièces de construction et permettant une fixation autonome de cet élément de positionnement.

7. Dispositif de positionnement suivant l'une quelconque des revendications 1 à 6, caractérisé en ce qu'il est prévu en double ou en multiple (544, 546) pour le positionnement de deux pièces de construction (502, 504).
